# FASCICULE DE BREVET EUROPEEN

(11) **EP 3 672 374 B1**
(45) Date de publication et mention de la délivrance du brevet: **25.08.2021**
(21) Numéro de dépôt: 19199027.4
(22) Date de dépôt: 23.09.2019
(51) Int. Cl.: H05B 35/00, H04W 4/80, H04W 84/18, H04W 92/18

(54) **DISPOSITIFS ET PROCÉDÉS POUR L'APPARIEMENT ENTRE UN DISPOSITIF DE COMMANDE SANS FIL ET UN APPAREIL ÉLECTRONIQUE**
VERFAHREN UND VORRICHTUNGEN ZUR PAARIGKEIT EINES DRAHTLOSEN FERNBEDIENUNGSGERÄTS MIT EINEM ELEKTRISCHEN GERÄT
METHODS AND DEVICES FOR PAIRING A WIRELESS REMOTE CONTROL DEVICE WITH AN ELECTRICAL DEVICE

(30) Priorité: 21.12.2018 FR 1873989
(43) Date de publication de la demande: 24.06.2020
(73) Titulaire: Schneider Electric Industries SAS, 92500 Rueil Malmaison (FR)
(72) Inventeur: PETTINOTTO, Gilles, 38050 GRENOBLE CEDEX 09 (FR); PILLET, Alexis, 38050 GRENOBLE CEDEX 09 (FR)
(74) Mandataire: Lavoix

(56) Documents cités:
- EP-A1- 3 155 841
- EP-A1- 3 358 910
- WO-A1-2018/000570
- WO-A2-2014/047384
- CN-U- 205 265 270
- US-A1- 2016 321 448
- Tan Yen Kheng: "Vibration Energy Harvesting System" In: "Energy Harveting Autonomous Sensor Systems : Design, Analysis and Practical Implementation", 29 janvier 2013 (2013-01-29), CRC Press LLC, XP055595247, ISBN: 978-1-4398-9273-2 pages 109-135, * page 111 - page 134; figures 4.2, 4.6, 4.25 *

## Description

La présente invention concerne des dispositifs et des procédés pour apparier un dispositif de commande sans fil à un appareil électronique.

Dans le domaine de la domotique et des objets connectés, il existe des dispositifs de commande sans fil, tels que des interrupteurs sans fil, qui permettent de piloter à distance des appareils électroniques tels que des lampes ou des équipements électriques ou des équipements domotiques.

Typiquement, la connexion entre le dispositif de commande et l'appareil à piloter est réalisée par une liaison radio, telle qu'une liaison radio à courte portée.

Pour des raisons de sécurité, il est souhaitable que cette connexion puisse être encryptée et/ou que le dispositif de commande soit préalablement authentifié par l'appareil à piloter, afin d'éviter qu'un intrus ne puisse piloter l'appareil sans y avoir été autorisé.

Un dispositif de commande nouvellement ajouté dans une installation domotique doit donc être préalablement apparié avec le ou les appareils à piloter avant de pouvoir être utilisé. En pratique, un utilisateur doit pouvoir demander l'appariement du dispositif de commande de façon simple et aisée.

Or, les dispositifs de commande sans fil doivent être simples et peu coûteux à fabriquer et ne doivent consommer que très peu d'énergie. De fait, ils présentent généralement une conception simplifiée et ne disposent que de ressources matérielles très limitées. Il est donc compliqué et inutilement coûteux d'y intégrer une interface utilisateur, tel qu'un bouton supplémentaire, servant uniquement pour l'appariement.

Un exemple d'un dispositif de commande sans fil est décrit par l'article de Tan Yen Kheng intitulé « Vibration Energy Harvesting System » et paru dans l'ouvrage « Energy harvesting autonomous systems », éditions CRC Press, 2013.

Il existe donc un besoin pour un dispositif de commande sans fil et un procédé associé permettant de commander l'appariement du dispositif de commande capable de remédier aux inconvénients décrits ci-dessus.

A cet effet, un aspect de l'invention concerne un procédé de fonctionnement d'un dispositif de commande sans fil, ce procédé comportant :
- le démarrage d'un circuit de commande du dispositif de commande suite à l'actionnement, par un utilisateur, d'un organe de commande couplé à un dispositif de récupération d'énergie pour recharger une réserve d'énergie qui, seule, alimente électriquement le dispositif de commande ;
- l'envoi d'un message de commande à destination d'un appareil électronique, au moyen d'une interface radio du dispositif de commande, le message de commande incluant un ordre de commande ;
- la comparaison de la durée écoulée depuis le démarrage du circuit de commande avec une première valeur seuil, le dispositif de récupération d'énergie étant configuré pour générer, lors de chaque actionnement de l'organe de commande, une quantité d'énergie suffisante pour alimenter le dispositif de commande pendant une durée inférieure à la première valeur seuil ;
- lorsque la durée écoulée est supérieure ou égale à la première valeur seuil, l'envoi d'un message de requête d'appariement à destination de l'appareil électronique, au moyen de l'interface radio;
dans lequel l'envoi du message de requête d'appariement est répété tant que la durée écoulée est supérieure à la première valeur seuil et inférieure à une deuxième valeur seuil ;
dans lequel la deuxième valeur seuil est comprise entre 800ms et 1000ms ;
et dans lequel la première valeur seuil est comprise entre 400ms et 600ms.

Grâce à l'invention, une demande d'appariement peut être émise par un utilisateur simplement au moyen de l'organe de commande, en appuyant plusieurs fois sur l'organe de commande au lieu d'appuyer une seule fois, ce qui permet de générer plus d'énergie, et donc de permettre au circuit de commande de fonctionner pendant suffisamment longtemps pour atteindre la première valeur seuil et ainsi pouvoir envoyer les messages de requête d'appariement.

L'organe de commande sert donc à la fois à piloter un appareil électronique et à demander l'appariement du dispositif de commande. Il n'est donc pas nécessaire de rajouter une interface de commande dédiée pour cette seule fonction, ce qui aurait accru la complexité et le coût du dispositif de commande.

Selon des aspects avantageux mais non obligatoires, un tel procédé peut incorporer une ou plusieurs des caractéristiques suivantes, prises isolément ou suivant toute combinaison techniquement admissible :
- L'envoi du message de commande est répété tant que la durée écoulée est inférieure à la première valeur seuil.
- Le procédé comporte la reprise de l'envoi de messages de commande lorsque la durée écoulée est supérieure à la deuxième valeur seuil et tant qu'il reste suffisamment d'énergie dans la réserve d'énergie.
- Le message de requête d'appariement inclut des informations d'authentification propres au dispositif de commande, notamment une clé cryptographique publique associée au dispositif de commande.
- Le message de commande comporte un en-tête et un corps comprenant :
   - un identifiant unique du dispositif de commande ;
   - l'ordre de commande ;
   - des données de sécurité générées par le dispositif de commande et visant à éviter des attaques par rejeu ;
   - une signature numérique du message, générée par le dispositif de commande.
- Le message de requête d'appariement comporte un en-tête et un corps comprenant :
   - un identifiant unique du dispositif de commande ;
   - des informations d'authentification propres au dispositif de commande ;
   - une signature numérique du message, générée par le dispositif de commande.
- Le procédé comporte l'arrêt du circuit de commande lorsque la réserve d'énergie est vide.

Selon un autre aspect, le procédé comporte :
- la réception, par une pluralité d'appareils électroniques appartenant à un même groupe d'appareils, du message de commande émis par le dispositif de commande ;
- l'envoi, par chaque appareil électronique, d'un message de synchronisation à destination des autres appareils électroniques du groupe, le message de synchronisation comportant des informations représentatives d'un état de l'appareil électronique et d'un ordre de commande contenu dans ledit message de commande;
- détecter qu'au moins un des appareils électroniques du groupe présente un état différent de l'état d'au moins un ou plusieurs des autres appareils électroniques du groupe ;
- modifier l'état dudit appareil électronique en fonction de l'état d'un appareil principal du groupe.

Selon un autre aspect, l'appareil principal est l'appareil électronique du groupe pour lequel la qualité de la liaison de communication radio avec le dispositif de commande est la plus élevée parmi les appareils électroniques du groupe.

Selon encore un autre aspect, l'invention concerne un procédé d'appariement entre un dispositif de commande sans fil et un appareil électronique, ce procédé comportant :
- l'activation d'un mode d'appariement de l'appareil électronique ;
- par le dispositif de commande sans fil, la mise en oeuvre d'un procédé tel que décrit ci-dessus ;
- par l'appareil électronique :
   détecter la réception d'un message de requête d'appariement envoyé par ledit dispositif de commande ;
   déterminer si ledit dispositif de commande est déjà apparié avec l'appareil électronique ;
   accepter l'appariement du dispositif de commande si ce dernier n'était pas déjà apparié avec l'appareil électronique ou, dans le cas contraire, supprimer l'appariement du dispositif de commande.

Selon un autre aspect, l'invention concerne un dispositif de commande sans fil, comportant :
- un organe de commande actionnable par un utilisateur ;
- un dispositif de récupération d'énergie couplé à l'organe de commande ;
- une réserve d'énergie rechargée par le dispositif de récupération d'énergie et qui, seule, alimente électriquement le dispositif de commande ;
- un circuit de commande et une interface radio ;
le circuit de commande étant programmé pour :
- démarrer suite à l'actionnement, par un utilisateur, de l'organe de commande ;
- envoyer un message de commande à destination d'un appareil électronique, au moyen de l'interface radio, le message de commande incluant un ordre de commande ;
- comparer la durée écoulée depuis le démarrage du circuit de commande avec une première valeur seuil, le dispositif de récupération d'énergie étant configuré pour générer, lors de chaque actionnement de l'organe de commande, une quantité d'énergie suffisante pour alimenter le dispositif de commande pendant une durée inférieure à la première valeur seuil ;
- lorsque la durée écoulée est supérieure ou égale à la première valeur seuil, envoyer un message de requête d'appariement à destination de l'appareil électronique, au moyen de l'interface radio ;
dans lequel l'envoi du message de requête d'appariement est répété tant que la durée écoulée est supérieure à la première valeur seuil et inférieure à une deuxième valeur seuil ;
dans lequel la deuxième valeur seuil est comprise entre 800ms et 1000ms ;
et dans lequel la première valeur seuil est comprise entre 400ms et 600ms.

Selon encore un autre aspect, l'invention concerne un système domotique comportant un dispositif de commande tel que défini précédemment et une pluralité d'appareils électroniques, dans lequel les appareils électroniques sont configurés pour mettre en oeuvre des étapes comportant :
- la réception, par une pluralité d'appareils électroniques appartenant à un même groupe d'appareils, du message de commande émis par le dispositif de commande ;
- l'envoi, par chaque appareil électronique, d'un message de synchronisation à destination des autres appareils électroniques du groupe, le message de synchronisation comportant des informations représentatives d'un état de l'appareil électronique et d'un ordre de commande contenu dans ledit message de commande ;
- détecter qu'au moins un des appareils électroniques du groupe présente un état différent de l'état d'au moins un ou plusieurs des autres appareils électroniques du groupe ;
- modifier l'état dudit appareil électronique en fonction de l'état d'un appareil principal du groupe.

L'invention sera mieux comprise et d'autres avantages de celle-ci apparaîtront plus clairement à la lumière de la description qui va suivre d'un mode de réalisation de dispositifs et de procédés pour l'appariement d'un dispositif de commande sans fil, donnée uniquement à titre d'exemple et faite en référence aux dessins annexés, dans lesquels :
[Fig 1] la figure 1 est une illustration schématique d'un appareil électronique et d'un dispositif de commande sans fil selon des modes de réalisation de l'invention pour piloter l'appareil électronique ;
[Fig 2] la figure 2 est un diagramme de flux d'un exemple d'un procédé de fonctionnement du dispositif de commande de la figure 1 ;
[Fig 3] la figure 3 est un chronogramme illustrant l'envoi de messages radio lors d'un exemple de fonctionnement du dispositif de commande de la figure 1 au cours de la mise en œuvre du procédé de la figure 2 ;
[Fig 4] la figure 4 est une illustration schématique d'exemples de messages envoyés par le dispositif de commande de la figure 1 ;
[Fig 5] la figure 5 est un diagramme de flux d'un procédé d'appariement de l'appareil électronique et du dispositif de commande sans fil de la figure 1 ;
[Fig 6] la figure 6 est une illustration schématique d'un appareil électronique selon des modes de réalisation de l'invention ;
[Fig 7] la figure 7 est une illustration schématique de deux exemples de groupes d'appareils électroniques selon des modes de réalisation de l'invention ;
[Fig 8] la figure 8 est un diagramme de flux d'un procédé de création d'un groupe d'appareils électroniques de la figure 7 ;
[Fig 9] la figure 9 est un diagramme de flux d'un procédé de synchronisation entre les appareils électroniques d'un même groupe selon des modes de réalisation de l'invention.

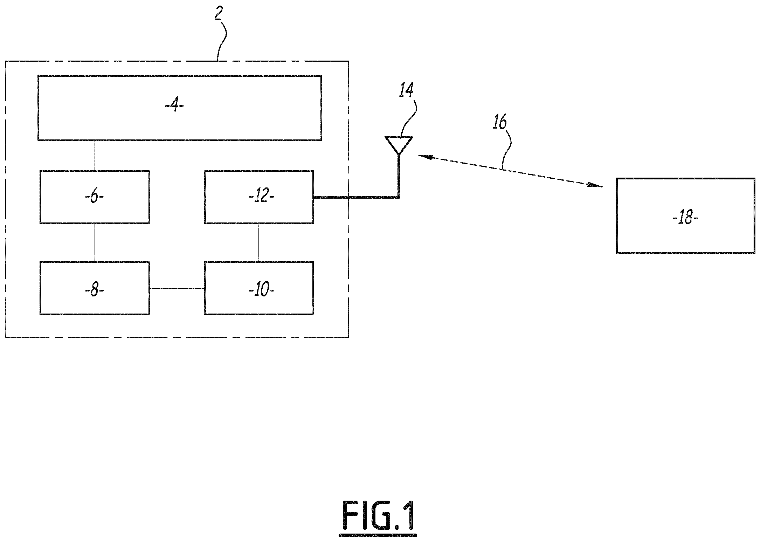

En référence à la figure 1 est représenté un dispositif de commande sans fil 2.

Par exemple, le dispositif de commande 2 est une télécommande ou un interrupteur mural sans fil.

Selon des exemples, le dispositif de commande 2 peut être utilisé dans une installation domotique pour commander un ou plusieurs appareils électroniques, notamment dans un bâtiment à usage résidentiel, industriel ou commercial.

Le dispositif de commande 2 comporte un organe de commande 4, un dispositif de récupération d'énergie 6 couplé à l'organe de commande 4, une réserve d'énergie 8 alimentée par le dispositif 6, un circuit électronique de commande 10, une interface de communication radio 12 et une antenne radio 14.

L'interface 12 et l'antenne 14 permettent d'établir une liaison de communication radio 16 pour communiquer avec un appareil électronique 18.

Ainsi, le dispositif de commande 2 n'a pas besoin d'être raccordé à l'appareil 18 par un fil.

Selon des exemples donnés uniquement à titre illustratif, l'appareil électronique peut être un système d'éclairage, incluant une ou plusieurs lampes, ou un équipement électrique tel qu'une prise électrique, ou un équipement domotique tel qu'un système de chauffage ou de climatisation, des volets électriques, un contrôleur domotique ou d'autres exemples encore.

L'organe de commande 4 est actionnable par un utilisateur pour envoyer un ordre de commande à destination de l'appareil 18, par exemple pour allumer ou pour éteindre l'appareil 18.

Selon des modes de réalisation, l'organe de commande 4 est un dispositif mécanique ou électromécanique commutable entre une première position et une deuxième position et peut à cette fin comporter une partie mobile sur laquelle un utilisateur peut appuyer, tel qu'un interrupteur ou un bouton poussoir.

Par exemple, l'organe de commande 4 est un interrupteur à bascule commutable entre deux positions stables.

Selon d'autres exemples, l'organe de commande 4 est un interrupteur de type bouton poussoir commutable entre deux positions stables ou, en variante, entre une position stable et une position instable.

Selon encore d'autres variantes, l'organe de commande 4 est un interrupteur tactile sans contact.

Le dispositif 6 est configuré pour générer une quantité prédéfinie d'énergie électrique lorsque l'organe de commande 4 est actionné par l'utilisateur et pour stocker la quantité d'énergie ainsi générée dans la réserve d'énergie 8.

Ainsi, le dispositif 6 est couplé avec l'organe de commande 4 et connecté avec la réserve d'énergie 8.

Selon des exemples, le dispositif 6 comprend un générateur électromagnétique, tel qu'une dynamo ou un système incluant un aimant et un solénoïde déplaçables l'un par rapport à l'autre pour générer un courant électrique lorsque l'organe de commande 4 est actionné par l'utilisateur.

En variante, le dispositif 6 peut comporter un générateur piézoélectrique connecté mécaniquement avec une partie mobile de l'organe de commande 4.

La réserve d'énergie 8 comporte un ou plusieurs éléments de stockage d'électricité rechargeables, tels qu'un condensateur, ou un super-condensateur, ou un accumulateur électrochimique, ou tout élément équivalent.

En pratique, selon des modes de réalisation, le dispositif de commande 2 est dépourvu de toute autre source d'alimentation électrique que la réserve 8.

Le circuit électronique de commande 10 comporte une unité logique de calcul tel qu'un microcontrôleur, ainsi qu'une mémoire informatique.

La mémoire forme un support non-transitoire de stockage de données lisible par ordinateur.

Selon des exemples, la mémoire est une mémoire ROM, ou une mémoire RAM, ou une mémoire non volatile de type EPROM, ou EEPROM, ou FLASH, ou NVRAM, ou une mémoire optique ou une mémoire magnétique.

La mémoire comporte des instructions exécutables et/ou un code logiciel pour mettre en œuvre un procédé tel que décrit ci-après pour faire fonctionner le dispositif de commande 2 lorsque ces instructions et/ou ce code sont exécutés par l'unité logique de calcul.

Le circuit de commande 10 est également apte à mesurer le temps qui s'écoule, par exemple grâce une horloge dédiée ou grâce à une horloge intégrée au microcontrôleur.

En variante, le circuit de commande 10 comporte un circuit électronique dédié, par exemple de type ASIC (Application-Specific Integrated Circuit) ou un composant logique programmable, par exemple de type FPGA (Field-Programmable Gâte Array).

Selon des modalités d'implémentation, le circuit de commande 10 est alimenté électriquement uniquement grâce à la réserve d'énergie 8 et cesse de fonctionner lorsque la réserve d'énergie 8 est vide ou insuffisamment chargée.

L'interface radio 12 est connectée au circuit de commande 10 et permet, grâce à l'antenne 14, d'établir la liaison de communication 16.

Par exemple, l'interface radio 12 comporte un circuit émetteur-récepteur connecté au circuit de commande 10 et à l'antenne 14.

Selon des exemples, l'interface radio 12 est configurée pour établir une liaison radio de courte portée, notamment suivant un protocole de communication radio de type Bluetooth (marque déposée), de type Zigbee (marque déposée) ou de type Z-Wave (marque déposée), ou suivant d'autres protocoles de communication radio.

En variante, l'interface radio 12 peut établir une liaison radio longue portée, par exemple suivant un protocole de communication radio de type LoRa (marque déposée).

En pratique, l'interface radio 12 est alimentée électriquement uniquement grâce à la réserve d'énergie 8 et cesse de fonctionner lorsque la réserve d'énergie 8 est vide ou insuffisamment chargée.

De préférence, le dispositif de récupération d'énergie 6 est configuré pour générer, lors de chaque actionnement de l'organe de commande 4, c'est-à-dire ici lors de chaque appui d'un utilisateur sur la partie mobile de l'organe de commande 4, une quantité d'énergie suffisante pour alimenter le dispositif de commande 2 pendant une certaine durée prédéfinie, notamment lorsque ce dispositif de commande 2 envoie des messages à l'appareil 8.

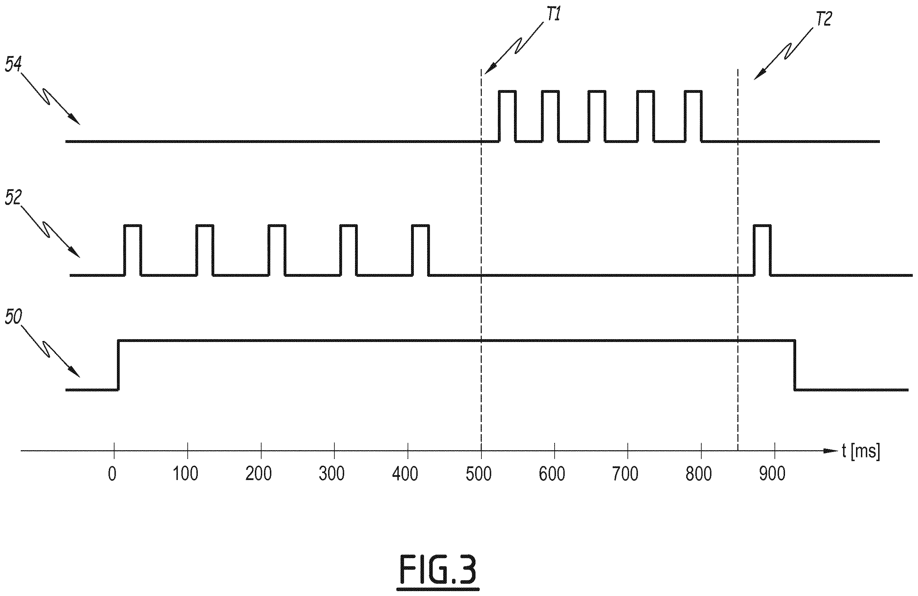

Par la suite, on définit une première valeur seuil de durée, notée T1 (figure 3).

La première valeur seuil T1 est choisie de telle sorte que ladite durée prédéfinie soit inférieure à la première valeur seuil T1, par exemple inférieure ou égale à 60%, ou à 80%, ou à 90%, ou à 95% de la première valeur seuil T1.

Selon des exemples, la première valeur seuil T1 est supérieure ou égale à 400 millisecondes (ms) et inférieure ou égale à 600ms et, de préférence, supérieure ou égale à 450ms et inférieure ou égale à 550ms.

Dans l'exemple illustré, la première valeur seuil T1 est égale à 500ms.

On comprend donc qu'un unique actionnement de l'organe de commande 4 génère une quantité d'énergie suffisante pour charger la réserve 8 de manière à assurer l'alimentation du dispositif de commande 2 pendant une durée ne pouvant pas excéder la première valeur seuil T1, et qu'un actionnement supplémentaire de l'organe de commande 4 génère une quantité d'énergie supplémentaire qui permet au dispositif de commande 2 de fonctionner plus longtemps, pendant une deuxième durée prédéfinie, allant au-delà de la première valeur seuil T1.

Par exemple, l'actionnement supplémentaire peut être réalisé immédiatement après l'actionnement initial de l'organe de commande 4. C'est notamment le cas lorsque l'utilisateur appuie deux fois de suite sur l'organe de commande 4.

Par la suite, on définit une deuxième valeur seuil de durée, notée T2.

Selon des exemples, la deuxième valeur seuil T2 est supérieure ou égale à 800 ms et inférieure ou égale à 1000ms et, de préférence, supérieure ou égale à 850ms et inférieure ou égale à 950ms.

Dans l'exemple illustré, la deuxième valeur seuil T2 est égale à 850ms.

En pratique, la première valeur seuil T1 et la deuxième valeur seuil T2 sont choisies notamment en fonction de propriétés du dispositif de récupération 6 et/ou de propriétés de la réserve d'énergie 8 et/ou de propriétés de consommation du circuit de commande 10 et de l'interface radio 12.

De façon générale, la communication entre le dispositif de commande 2 et l'appareil 18 comporte l'envoi de messages sur la liaison de communication 16.

Par exemple, chaque message envoyé par le dispositif de commande 2 comporte une trame incluant des données destinées à l'appareil 18.

De préférence, l'envoi de messages sur la liaison 16 est sécurisé grâce à une signature incorporée dans chaque message, voire, en variante, en cryptant le contenu des messages ou la liaison de communication 16.

Selon des modes de réalisation, le circuit de commande 10 est programmé pour signer chacun des messages émis par le dispositif de commande 2 au moyen d'une signature numérique générée à partir d'une clé cryptographique privée stockée en mémoire.

L'appareil 18 est de son côté programmé pour, lorsqu'il reçoit un message provenant d'un dispositif de commande, rejeter ou ignorer un message qui serait dépourvu de signature et/ou signé avec une signature inconnue, et n'accepter que les messages signés avec une signature valide et connue.

On comprend donc que le dispositif de commande 2 doit préalablement faire l'objet d'un appariement avec l'appareil 18 afin de pouvoir piloter ce dernier.

Dans des modes de réalisation, l'appariement (« pairing » en anglais) comporte l'identification préalable du dispositif de commande 2 auprès de l'appareil 18 en lui envoyant des informations d'authentification qui sont propres au dispositif de commande.

Par exemple, les informations d'authentification comportent une clé cryptographique publique associée à la clé cryptographique privée du dispositif de commande 2.

Selon des variantes optionnelles et non décrites en détail, la clé cryptographique privée peut aussi être utilisée par le dispositif de commande 2 pour encrypter les messages.

En pratique, le dispositif de commande 2 est apte à envoyer deux types de messages différents à l'appareil 18 : des messages de commande et des messages de requête d'appariement.

A titre d'exemple, un message de commande permet de piloter l'appareil 18.

Par exemple, le message de commande contient un ordre de commande décrivant une action que doit accomplir l'appareil 18 (par ex. allumer ou éteindre une lampe), la nature de cette action pouvant dépendre de l'état de l'organe de commande 4.

Le message de requête d'appariement contient, entre autre, les informations d'authentification précédemment évoquées.

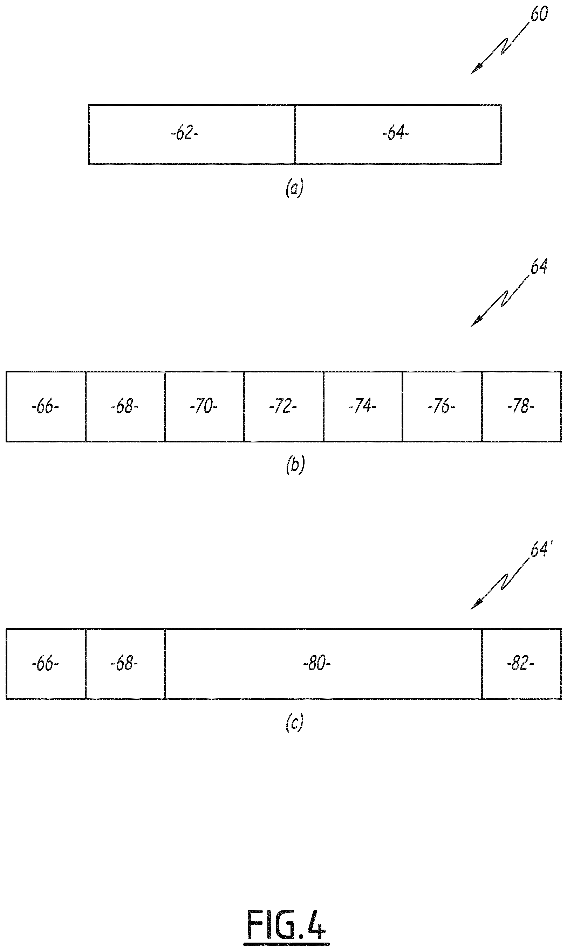

Sur la figure 4 sont illustrés des exemples de messages ou trames radio pouvant être envoyés par le dispositif de commande 2.

La zone (a) de la figure 4 représente un exemple de message 60 comportant un en-tête 62 et un corps 64 contenant les données à transmettre.

En pratique, la forme et le contenu l'en-tête 62 dépendent de la nature du protocole de communication utilisé pour la liaison de communication 16. L'en-tête 62 n'est pas décrit plus en détail ici.

La zone (b) de la figure 4 représente le corps 64 d'un exemple d'un message de commande.

Dans l'exemple illustré, le corps 64 comporte :
- un champ 66 contenant des données identifiant la nature du message, par exemple pour spécifier que le message est un message de commande ;
- un champ 68 incluant un identifiant unique du dispositif de commande 2, tel qu'une valeur de type UUID ;
- un champ 70 comportant des informations de routage, notamment lorsque la commande est destinée à un appareil autre que l'appareil 18 qui reçoit le message mais qui est connecté à ce dernier par une autre liaison de communication ;
- un champ 72 comportant un ordre de commande pour piloter l'appareil électronique, cet ordre étant par exemple exprimé sous la forme d'un code de fonction prédéfini ;
- un champ 74 comportant un numéro de version du circuit de commande 10 ;
- un champ 76 comportant des données de sécurité, tel qu'un aléa numérique généré par le dispositif de commande 2, visant à éviter des attaques par rejeu (« replay attack » en anglais) ;
- un champ 78 comportant une signature numérique du message, générée par le dispositif de commande 2.

Cet exemple est donné uniquement à titre illustratif et, selon d'autres modes de réalisation, le corps 64 peut être formé autrement et contenir des informations différentes, certains champs et/ou certaines informations pouvant être omises ou présentées différemment.

La zone (c) de la figure 4 représente un corps 64' d'un exemple d'un message de requête d'appariement, ce corps 64' remplaçant le corps 64 précédemment décrit.

Dans l'exemple illustré, le corps 64' comporte :
- un champ 66 contenant des données identifiant la nature du message, par exemple ici pour spécifier que le message est un message de requête d'appariement ;
- un champ 68 incluant un identifiant unique du dispositif de commande 2, tel que précédemment décrit ;
- un champ 80 comportant des informations d'authentification telles que précédemment décrites, comportant par exemple la clé cryptographique publique ;
- un champ 82 comportant une signature numérique du message, générée par le dispositif de commande 2, telle que précédemment décrite.

Cet exemple est donné uniquement à titre illustratif et, selon d'autres modes de réalisation, le corps 64' peut être formé autrement et contenir des informations différentes, certains champs et/ou certaines informations pouvant être omises ou présentées différemment.

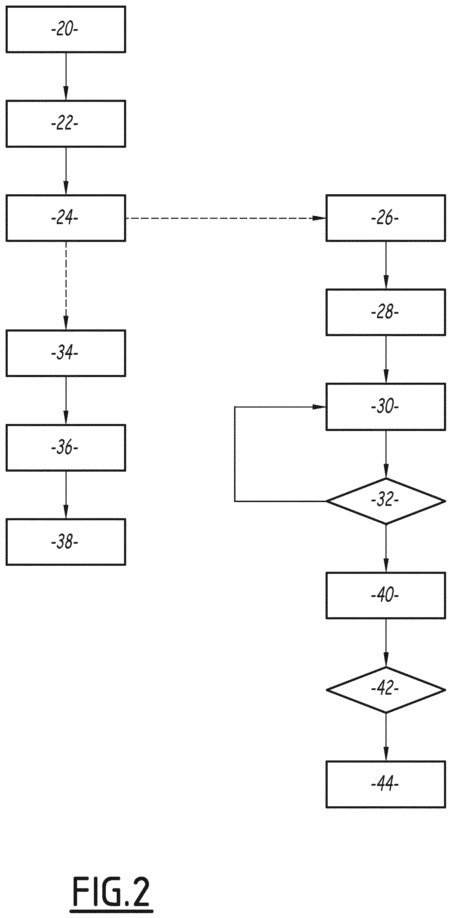

Un exemple de fonctionnement du dispositif de commande 2 est maintenant décrit en référence aux figures 2 et 3.

Initialement, le circuit de commande 10 est dans un état éteint ou inactif et la réserve d'énergie 8 est vide ou déchargée.

Lors d'une étape 20, un utilisateur actionne l'organe de commande 4.

En réponse, le dispositif 6 génère une quantité prédéfinie d'énergie électrique (étape 22) qui sert à charger la réserve d'énergie 8 (étape 24).

Ensuite, lors d'une étape 26, le circuit de commande 10 démarre immédiatement, dès lors que la réserve d'énergie 8 est suffisamment chargée.

Par exemple, le circuit de commande 10 est programmé pour démarrer (ou être « réveillé ») et rester en fonctionnement dès que la réserve d'énergie 8 atteint un certain niveau de charge.

Lors d'une étape 28, le circuit de commande 10 initialise un compteur de temps pour décompter la durée écoulée depuis le démarrage du circuit de commande 10.

Lors d'une étape 30, le circuit de commande 10 génère et envoie, au moyen de l'interface radio 12, un message de commande à destination de l'appareil 18.

Puis, lors d'une étape 32, le circuit de commande 10 compare la durée écoulée depuis le démarrage du circuit de commande 10, telle qu'indiquée par le compteur, avec la première valeur seuil T1.

Par exemple, la première valeur seuil T1 est préenregistrée en mémoire du circuit de commande 10.

Selon des modes de réalisation, tant que la durée écoulée est inférieure à la première valeur seuil T1, l'envoi des messages de commande est répété, par exemple en réitérant les étapes 30 et 32.

Par exemple, l'envoi des messages de commande est réalisé avec une périodicité prédéfinie.

Si la réserve d'énergie 8 n'a pas été rechargée entre temps, le circuit de commande 10 cesse de fonctionner. L'envoi des messages de commande est alors interrompu. Le procédé prend fin.

Il en va différemment si la réserve d'énergie 8 a été rechargée entre temps.

Par exemple, en parallèle, lors d'une étape 34, l'organe de commande 4 est à nouveau actionné par un utilisateur.

En réponse, le dispositif 6 génère une quantité prédéfinie d'énergie électrique (étape 36) qui vient s'ajouter à l'énergie déjà contenue dans la réserve d'énergie 8 (étape 38).

En pratique, les étapes 20 et 34 peuvent être mises en œuvre en succession rapide lorsque l'organe de commande 4 est doublement actionné, par exemple lorsque l'utilisateur appuie deux fois de suite sur l'organe de commande 4.

Lors de l'étape 32, si le circuit de commande 10 détermine que la durée écoulée est supérieure ou égale à la première valeur seuil T1, alors, au cours d'une étape 40, le circuit de commande 10 génère et envoie, au moyen de l'interface radio 12, un message de requête d'appariement à destination de l'appareil 18.

Puis, lors d'une étape 42, le circuit de commande 10 compare la durée écoulée depuis le démarrage du circuit de commande, telle qu'indiquée par le compteur, avec la deuxième valeur seuil T2.

Par exemple, la deuxième valeur seuil T2 est préenregistrée en mémoire du circuit de commande 10.

Selon des modes de réalisation, tant que la durée écoulée est inférieure à la deuxième valeur seuil T2, tout en étant supérieure à la première valeur seuil T1, l'envoi des messages de requête d'appariement est répété, par exemple en réitérant les étapes 40 et 42.

Par exemple, l'envoi des messages de requête d'appariement est réalisé avec une périodicité prédéfinie, qui n'est pas nécessairement la même que la période d'envoi des messages de commande.

Si la réserve d'énergie 8 est déchargée avant d'atteindre la deuxième valeur seuil T2, le circuit de commande 10 cesse de fonctionner et l'envoi des messages de de requête d'appariement est interrompu. Le procédé prend fin.

Avantageusement, la deuxième valeur seuil T2 est choisie de sorte à laisser suffisamment de temps au circuit de commande 10 et à l'interface radio 12 pour envoyer au moins un message de requête d'appariement à destination de l'appareil 18 avant que la réserve d'énergie 8 soit déchargée.

Selon des modes de réalisation, si la réserve d'énergie 8 est toujours suffisamment chargée lorsque le circuit de commande 10 détermine, à l'étape 42, que la durée écoulée est supérieure ou égale à la deuxième valeur seuil T2, alors le procédé comporte, lors d'une étape 34, la reprise de l'envoi d'un message de commande à destination de l'appareil 18.

Par exemple, à ce stade, les messages de requête d'appariement ne sont plus envoyés.

Avantageusement, l'étape 44 est ensuite répétée jusqu'à ce que la réserve d'énergie 8 soit déchargée. L'envoi des messages de commande est alors interrompu et le procédé prend fin.

Sur la figure 3, la ligne 50 représente schématiquement l'état allumé ou éteint du circuit de commande 10 (illustré par un niveau haut ou bas, respectivement) en fonction du temps.

Le temps « t » est ici indiqué en millisecondes sur l'axe des abscisses et décompté à partir de l'instant où l'organe de commande 4 est actionné.

La ligne 52 représente les instants auxquels sont envoyés les messages de commande, chaque impulsion correspondant à l'envoi d'un message de commande.

De façon similaire, la ligne 54 représente les instants auxquels sont envoyés les messages de requête d'appariement, chaque impulsion correspondant à l'envoi d'un message de requête d'appariement.

Dans l'exemple illustré, le circuit de commande 10 démarre immédiatement après l'actionnement de l'organe de commande 4, par exemple au bout de quelques millisecondes.

Plusieurs messages de commande sont ensuite envoyés avant d'atteindre la première valeur seuil T1. Dans l'exemple illustré, cinq messages de commande sont ainsi envoyés, mais, en variante, ce nombre peut être différent, par exemple supérieur ou égal à 1.

Par la suite, plusieurs messages de requête d'appariement sont ensuite envoyés avant d'atteindre la deuxième valeur seuil T2. Dans l'exemple illustré, cinq messages de requête d'appariement sont ainsi envoyés, mais, en variante, ce nombre peut être différent, par exemple supérieur ou égal à 1.

Enfin, un unique message de commande additionnel est envoyé après avoir dépassé la deuxième valeur seuil T2, avant que le circuit de commande 10 s'éteigne faute de disposer d'assez d'énergie dans la réserve 8 pour continuer à fonctionner.

On comprend que cet exemple est donné à titre illustratif et que, selon d'autres modes de réalisation, le nombre d'envoi des messages, la périodicité d'envoi et la durée totale de fonctionnement pourraient être définis différemment.

Grâce à l'invention, une demande d'appariement peut être émise par un utilisateur simplement au moyen de l'organe de commande 4, en appuyant plusieurs fois sur l'organe de commande 4, par exemple en appuyant deux fois de suite, au lieu d'appuyer une seule fois pour commander normalement l'appareil 18.

Cette action sur l'organe de commande 4 permet de générer plus d'énergie, et donc de permettre au circuit de commande 10 de fonctionner pendant suffisamment longtemps pour atteindre la première valeur seuil T1 et ainsi pouvoir ensuite envoyer un ou plusieurs messages de requête d'appariement.

L'organe de commande 4 sert donc à la fois à piloter un appareil électronique et à demander l'appariement du dispositif de commande 2. Il n'est donc pas nécessaire de rajouter une interface de commande dédiée pour cette seule fonction, ce qui aurait accru la complexité et le coût du dispositif de commande 2.

Cela permet ainsi d'intégrer une fonction de demande d'appariement dans un dispositif de commande sans fil qui soit simple et peu coûteux à fabriquer et qui ne consomme que très peu d'énergie.

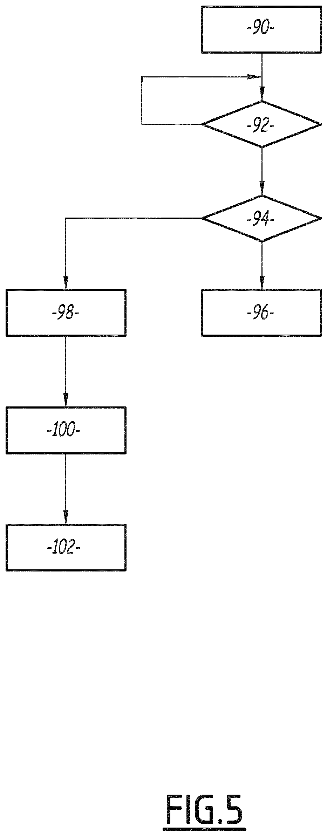

Un exemple d'un procédé d'appariement entre le dispositif de commande 2 et l'appareil 8 est maintenant décrit en référence à la figure 5.

Ce procédé est par exemple mis en œuvre par un circuit électronique de commande et une interface radio propres à l'appareil 18 qui ne sont pas décrits en détail ici.

Lors d'une étape 90, l'appareil 18 est placé dans un mode d'appariement, par exemple suite à une action d'un utilisateur.

Par exemple, l'appareil 18 peut être commuté entre un mode de fonctionnement normal, dans lequel les messages reçus sont destinés à piloter l'appareil et un mode d'appariement, dans lequel les messages reçus sont destinés à transmettre des informations d'identification d'un dispositif de commande.

En parallèle, le dispositif de commande 2 peut mettre en œuvre un procédé tel que décrit à la figure 2, afin de générer des messages de requête d'appariement.

Lors d'une étape 92, l'appareil 18 détecte si un message de requête d'appariement a été reçu.

Par exemple, l'étape 92 est répétée tant qu'aucun message de requête d'appariement n'est reçu et tant que l'appareil 18 est dans le mode d'appariement.

Si un message de requête d'appariement est reçu, alors, lors d'une étape 94, l'appareil 18 détermine si ledit dispositif de commande 2 est déjà apparié avec l'appareil électronique, par exemple en vérifiant automatiquement une liste d'appariement, ou une table, ou tout autre structure de données, indiquant l'état d'appariement de l'appareil 18 avec des périphériques extérieurs.

Par exemple, le dispositif de commande 2 est identifié au moyen de son identifiant unique enregistré dans le champ 68 du message de requête d'appariement.

Si le dispositif de commande 2 est identifiée comme n'étant pas déjà apparié avec l'appareil 18, alors l'appariement du dispositif de commande 2 est accepté par lors d'une étape 96.

Par exemple, ladite liste d'appariement est mise à jour en ajoutant l'identifiant du dispositif de commande 2.

Dans le cas contraire, c'est-à-dire si le dispositif de commande 2 est identifié comme étant déjà apparié avec l'appareil 18, alors l'appariement existant du dispositif de commande 2 est supprimé lors d'une étape 98.

Par exemple, ladite liste d'appariement est mise à jour en supprimant l'identifiant du dispositif de commande 2.

Optionnellement, lors d'étapes 100 et 102, le dispositif de commande 2 peut être automatiquement retiré de listes de suivi additionnelles définissant des groupes ou des familles de périphériques extérieurs appariés à l'appareil 18.

Ainsi, la commande d'appariement définie par la double activation de l'organe de commande 4 peut aussi servir à demander le désappariement du dispositif de commande 2.

En pratique, il suffit qu'un message de requête d'appariement soit reçu par l'appareil 18. Selon des exemples, une temporisation peut être installée pour inhiber temporairement le procédé et ainsi éviter que des messages de requête d'appariement envoyés en succession rapide par un même dispositif de commande 2 ne conduisent à une succession d'appariements et de désappariements.

Des modes de réalisation relatifs à l'appareil 18 sont maintenant décrits.

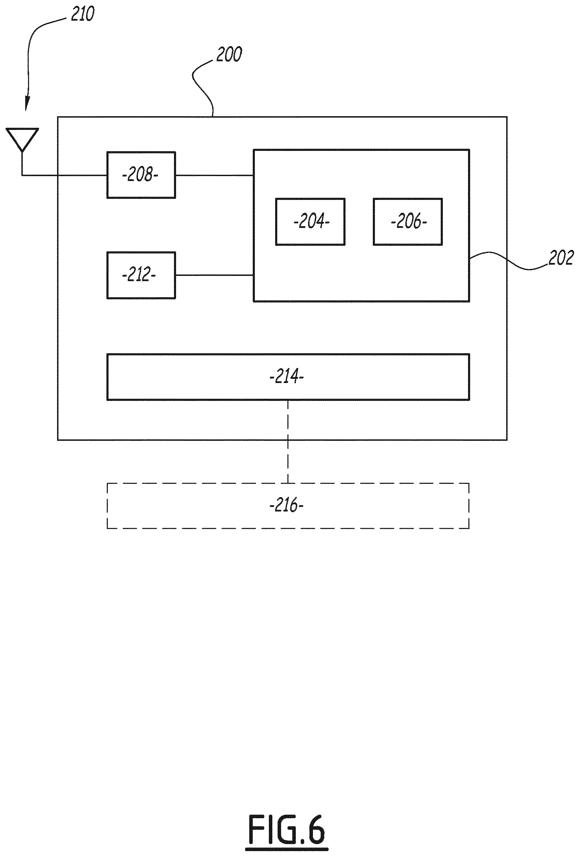

Sur la figure 6 est illustré un exemple d'un appareil électronique 200 analogue à l'appareil 18 générique précédemment décrit.

Dans l'exemple illustré, l'appareil 200 est un point de distribution électrique, par exemple un interrupteur, ou une prise électrique, et plus particulièrement une prise configurée pour recevoir un ou plusieurs éléments lumineux, tels qu'un module électroluminescent incluant une ou plusieurs diodes électroluminescentes (LED), ou une ampoule incandescente, ou une ampoule halogène, ou tout autre élément lumineux équivalent.

De façon générale, l'appareil 200 peut être un actionneur piloté électriquement, ou une prise capable de recevoir un actionneur commandé électriquement. Par « actionneur », on désigne un système électrique qui peut être commuté entre au moins deux états, par exemple un état allumé et un état éteint.

Selon un exemple donné à titre d'illustration, l'appareil 200 est un dispositif de connexion luminaire (DCL) compatible avec la norme CEI-61995. L'appareil 200 peut être destiné à être intégré dans un plafond ou dans un mur d'un bâtiment, bien que cet exemple ne soit pas limitatif et que d'autres usages sont possibles.

L'invention n'est notamment pas limitée à des systèmes d'éclairage.

Dans des modes de réalisation alternatifs, l'appareil 200 peut être un équipement électrique tel qu'une prise électrique, ou un équipement domotique tel qu'un système de chauffage ou de climatisation, des volets électriques, un contrôleur domotique, ou un actionneur, ou tout autre appareil similaire.

Selon des modes de réalisation donnés à titre d'exemple, l'appareil 200 fait partie d'un système domotique. Par exemple, ce système domotique inclut un ou plusieurs dispositifs de commande 2 configurés pour piloter l'appareil 200.

Selon des exemples de réalisation, l'appareil 200 comporte :
- un circuit électronique de commande 202 incluant une unité logique de calcul, telle qu'un processeur 204, et une mémoire 206 ;
- une interface radio 208, telle qu'un circuit d'émission-réception radio, comportant une antenne radio 210 ;
- une interface utilisateur 212, telle qu'un bouton ou un interrupteur, pour requérir un appariement de l'appareil 200, et
- un circuit d'actionnement 214 configuré pour être connecté à une charge électrique 216, afin d'alimenter électriquement l'élément ladite charge électrique.

Par exemple, la charge électrique 216 est un élément lumineux tel que décrit précédemment.

Selon des exemples, la mémoire 206 est une mémoire ROM, ou une mémoire RAM, ou une mémoire non volatile de type EPROM, ou EEPROM, ou FLASH, ou NVRAM, ou une mémoire optique ou une mémoire magnétique.

La mémoire 206 comporte des instructions exécutables et/ou un code logiciel pour mettre en œuvre un procédé tel que décrit ci-après pour faire fonctionner le dispositif de commande 2 lorsque ces instructions et/ou ce code sont exécutés par le processeur 204.

La mémoire 206 peut aussi contenir un identifiant servant à identifier l'appareil 200, tel qu'un identifiant de type UUID ou une adresse physique, telle qu'une adresse MAC (Media Access Control) associée à l'interface de communication radio 208, ou tout identifiant approprié.

En variante, le circuit électronique de commande 202 comporte un circuit électronique dédié, par exemple un circuit électronique de type ASIC (Application-Specific Integrated Circuit) ou un composant logique programmable, par exemple de type FPGA (Field-Programmable Gâte Array).

L'interface radio 208 est configurée pour établir une liaison avec l'interface radio 12 du dispositif de commande 2. De préférence, l'interface radio 208 est également configurée pour établir une liaison avec d'autres appareils 200.

De préférence, l'interface radio 208 utilise un protocole de communication radio de courte portée de type Bluetooth (marque déposée), ou de type Zigbee (marque déposée) ou de type Z-Wave (marque déposée), mais d'autres protocoles de communication radio sont possibles en variante.

Chaque appareil 200 est commutable entre un état actif et un état inactif, en fonction d'ordres de commande envoyés par un ou par plusieurs dispositifs de commande 2 auquel ledit appareil 200 a été préalablement apparié.

Par exemple, lorsque l'appareil 200 est dans l'état actif, l'élément lumineux 216 émet de la lumière, tandis que dans l'état inactif, l'élément lumineux 216 est éteint.

Les ordres de commande peuvent aussi être envoyés par un terminal de communication mobile, tel qu'un téléphone mobile, auquel l'appareil 200 a été préalablement apparié. Ainsi, dans ce qui suit, les exemples dans lesquels les appareils 200 sont commandés par un dispositif de commande 2 sont transposables aux cas où les appareils 200 sont commandés par un téléphone mobile.

Selon des modes de réalisation, plusieurs appareils 200 peuvent être associés à un ou plusieurs dispositifs de commande 2 au sein d'un même groupe.

Par exemple, lorsque plusieurs appareils 200 appartiennent à un même groupe, ils sont destinés à changer simultanément d'état en fonction des ordres de commande reçus.

Par exemple, chaque groupe est défini de façon logicielle.

Ainsi, les appareils 200 n'ont pas besoin d'être reliés par câble au dispositif de commande 2. Cela simplifie la création des groupes, ainsi que leur suppression et leur modification. En pratique, chaque appareil 200 peut néanmoins être connecté à un câble d'alimentation électrique qui fournit la puissance électrique nécessaire pour faire fonctionner l'élément 216.

L'appartenance ou la non appartenance d'un appareil 200 à un des groupes est par exemple gérée au moins en partie grâce au circuit de commande 202 de cet appareil 200.

Selon des modes de réalisation avantageux, les appareils 200 appartenant à un même groupe sont configurés pour être en communication entre eux, par exemple en s'échangeant des messages de synchronisation de façon répétée au cours du temps.

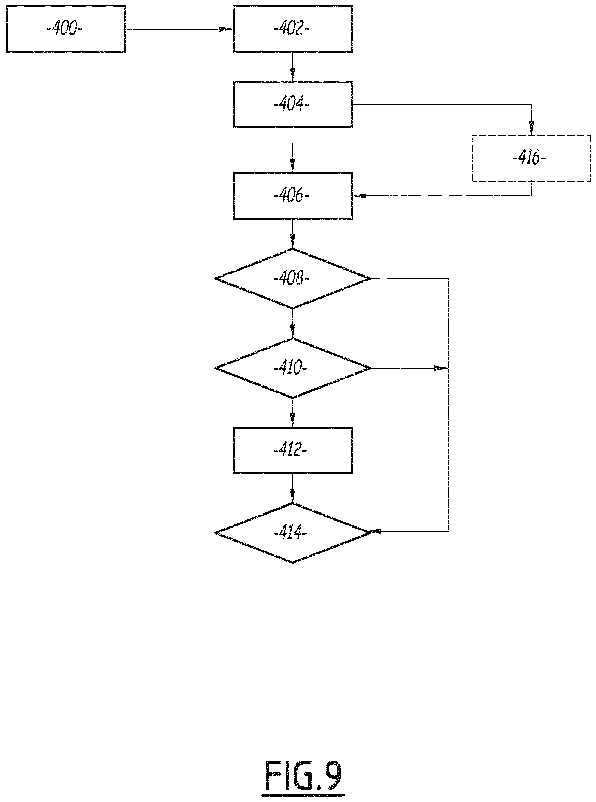

Par exemple, comme cela sera décrit ci-après dans un exemple en référence à la figure 9, les messages de synchronisation émis par un appareil 200 peuvent inclure des informations représentatives de l'état de l'appareil et du dernier ordre de commande reçu.

Cela permet d'éviter une perte de synchronisation entre plusieurs appareils 200, et notamment d'éviter qu'un des appareils 200 soit dans un état différent de l'état des autres appareils 200 du groupe.

En effet, si un des appareils ne reçoit pas un ordre de commande lui demandant de changer d'état alors que les autres appareils du groupe l'ont reçu, cet appareil se trouvera ensuite dans un état différent (par ex., une lampe qui reste allumée alors que les autres lampes sont éteintes) et tous les ordres de commande envoyés par la suite requérant un changement d'état conduiront cet appareil à rester dans un état différent de celui des autres appareils.

Selon des modes de réalisation donnés à titre d'exemple, chaque groupe est défini de façon logicielle au moyen d'un identifiant numérique partagé entre les appareils appartenant à un même groupe. Par exemple, chaque appareil 200 contient en mémoire 206 une structure de données listant les identifiants des groupes auxquels il appartient.

Selon des exemples, l'identifiant numérique du groupe (group UID name) peut être un identifiant unique formé à partir de l'identifiant numérique d'un des appareils du groupe, de préférence l'identifiant ayant la plus petite valeur numérique parmi les identifiants respectifs desdits appareils. A cet identifiant peut être ajouté un numéro d'ordre et une valeur numérique représentative du nombre d'appareils appartenant au groupe.

L'identifiant numérique du groupe peut être formé par concaténation de ces éléments, ou par d'autres opérations de combinaison suivant une fonction numérique prédéfinie.

Selon des exemples de réalisation, chaque groupe peut comporter un appareil 200 ayant un statut d'appareil primaire (aussi nommé « maître »), les autres appareils 200 du groupe ayant un statut d'appareil secondaire (aussi nommé « esclave »).

Par exemple, le statut d'appareil primaire ou d'appareil secondaire de chacun des appareils 200 est défini en fonction de la qualité de la liaison radio entre cet appareil et le dispositif de commande 2 envoyant les ordres de commande.

Par exemple, la qualité de la liaison radio est calculée pour chaque appareil à partir d'une ou plusieurs mesures de caractéristiques du signal radio et est exprimée sous la forme d'une valeur numérique, tel qu'un coefficient RSSI (« Received Signal Strength Indication »).

Cela permet d'assurer que l'appareil jouant le rôle d'appareil principal soit en mesure de recevoir les ordres de commande envoyés par le dispositif de commande 2 et ainsi d'éviter que des ordres de commande ne soient pas reçus.

En pratique, lors de la synchronisation entre appareils du groupe, l'appareil principal peut imposer son état à tout ou partie des appareils secondaires, ce qui limite ainsi le risque qu'un ordre de commande ne soit pas reçu par des appareils 200 du groupe qui seraient plus éloignés du dispositif de commande 2.

On comprend que le statut de chaque appareil peut évoluer au cours du temps lors de son fonctionnement, notamment si la qualité de la liaison radio venait à être altérée, ou si un dispositif de commande différent venait à être utilisé.

Par exemple, l'appareil 200 ayant le meilleur RSSI est sélectionné comme étant l'appareil principal. En pratique, il s'agit fréquemment de l'appareil 200 situé le plus proche du dispositif de commande 2.

En d'autres termes, l'appareil principal est l'appareil du groupe pour lequel la qualité de la liaison de communication radio avec le dispositif de commande 2 est la plus élevée parmi les appareils 200 du groupe.

La sélection de l'appareil principal peut être actualisée au cours du temps, par exemple lors de l'échange de messages de synchronisation entre appareils du groupe. Par exemple, ces messages de synchronisation sont émis par chaque appareil 200 à des intervalles réguliers, par exemple avec une périodicité prédéfinie.

Par exemple, chaque message de synchronisation contient au moins une information relative à la qualité de la liaison radio avec le dispositif de commande 2, telle qu'un coefficient RSSI, déterminée à partir de mesures réalisées lors de la plus récente communication avec ledit dispositif de commande 2.

De façon générale, le dispositif de commande 2 n'est pas forcément installé dans une position fixe et peut être déplacé. Par exemple, le dispositif de commande 2 est une télécommande portative déplaçable par un utilisateur. On comprend donc que la qualité de la liaison radio peut varier si le dispositif de commande 2 et qu'un nouvel appareil principal peut devoir être identifié parmi les appareils 200 du groupe lorsque le dispositif de commande 2 change de position.

Selon des modes de réalisation optionnels mais néanmoins avantageux, des conditions peuvent être imposées pour pouvoir construire des groupes, telles qu'une restriction sur le nombre maximal d'appareils 200 pouvant être membres d'un même groupe, et/ou sur le nombre minimal et maximal de dispositifs de commande pouvant être associés à un groupe, cette liste n'étant pas limitative.

Ces conditions peuvent être prédéfinies par un utilisateur ou par un administrateur du système domotique, et peuvent s'appliquer à tout le système domotique ou à au moins une partie des appareils 200.

Dans l'exemple illustré, les règles sont définies de sorte que chaque groupe doit contenir au moins un dispositif de commande 2 et comporter au moins deux appareils 200.

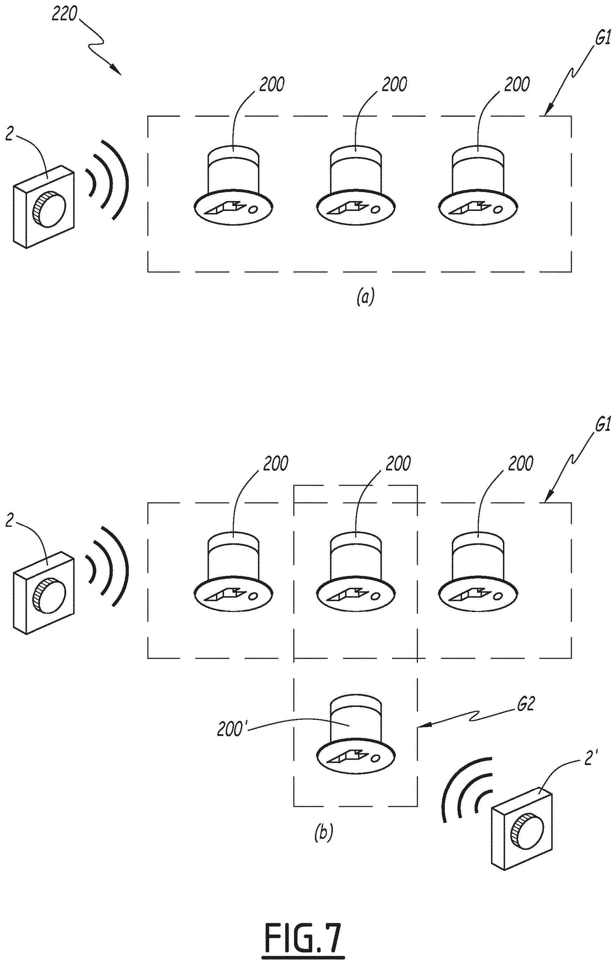

Sur la figure 7, l'insert (a) représente un premier exemple d'un ensemble 220 de plusieurs appareils 200 associés au sein d'un premier groupe G1 auquel est associé un dispositif de commande 2. Dans l'exemple illustré, les appareils 200 sont identiques et sont au nombre de trois. Cet exemple n'est pas limitatif.

L'insert (b) de la figure 7 représente un deuxième exemple dans lequel plusieurs appareils 200 et 200' sont associés à des groupes G1 et G2 différents.

Par exemple, des appareils 200 sont associés au sein d'un premier groupe G1 similaire à celui défini précédemment, et un appareil additionnel 200' est associé avec l'un des appareils 200 au sein d'un deuxième groupe G2. Ainsi, un des appareils 200 appartient à la fois aux groupes G1 et G2. Le premier groupe G1 est associé à un premier dispositif de commande 2, et le deuxième groupe G2 est associé à un deuxième dispositif de commande 2' similaire au dispositif de commande 2.

Une telle configuration est avantageuse pour piloter des appareils 200 et 200' qui sont répartis dans une intersection entre deux couloirs d'un bâtiment. Par exemple, le premier groupe G1 est associé à un premier couloir et le deuxième groupe G2 est associé à un deuxième couloir.

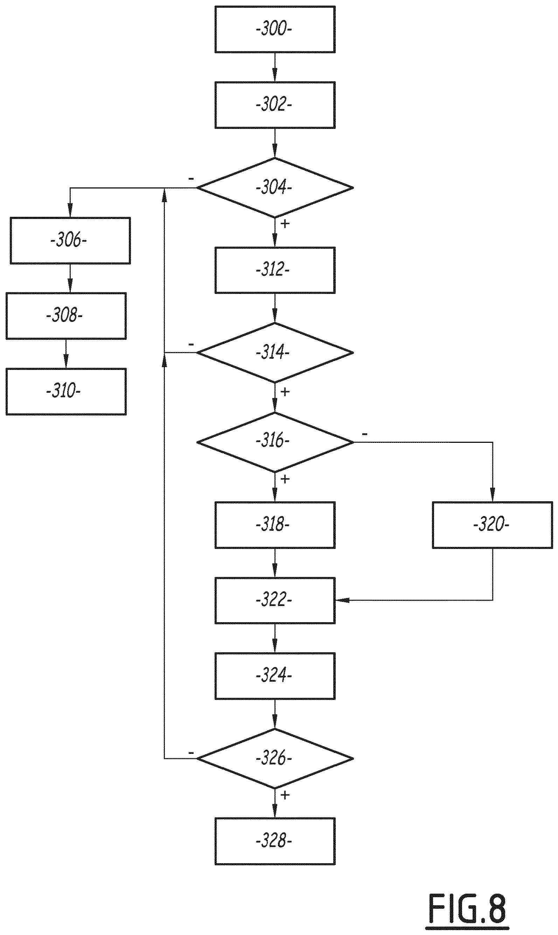

La figure 8 représente un procédé de création d'un groupe d'appareils 200.

Ce procédé est ici mis en œuvre par chacun des appareils 200 et/ou 200' destinés à rejoindre ledit groupe. Ces appareils sont par la suite nommés « appareils sélectionnés ».

Dans ce qui suit, il est seulement fait référence aux appareils 200 mais il est entendu que le procédé est également applicable à d'éventuels appareils 200' le cas échéant.

Lors d'une étape 300, les appareils 200 sélectionnés sont placés dans un mode d'appariement. Ce mode d'appariement peut être déclenché par une action d'un utilisateur sur l'interface 212, par exemple en appuyant sur le bouton ou sur l'interrupteur.

Optionnellement, une première étape de contrôle peut être mise en œuvre à ce stade par chaque appareil 200, pour vérifier si d'autres appareils 200 sont déjà en mode d'appariement et s'ils ne sont pas déjà ensemble dans un même groupe. Si tel est le cas, ces appareils 200 sortent alors du mode d'appariement. Dans le cas contraire, ces appareils 200 sortent du mode d'appariement.

Lors d'une étape 302, le dispositif de commande 2 est actionné par un utilisateur pour envoyer un message à destination des appareils 200 avec lesquels il est en communication par l'intermédiaire de la liaison radio, tels que des appareils 200 avec lesquels le dispositif de commande 2 a précédemment été apparié, et/ou des appareils 200 qui sont situés dans la portée radio du dispositif de commande 2.

Optionnellement, lors d'une étape 304, l'appareil 200 vérifie automatiquement si les conditions requises pour créer un groupe sont satisfaites.

Notamment, l'appareil 200 détermine si un groupe peut être crée en fonction d'une ou de plusieurs conditions relatives à l'appartenance de l'appareil 200 à un ou plusieurs groupes déjà existants et/ou en fonction de propriétés de l'appareil 200 et/ou de propriétés des autres appareils 200 devant rejoindre ledit groupe.

Selon un premier exemple, l'appareil 200 vérifie automatiquement si le dispositif de commande 2 n'est pas déjà membre d'un groupe auquel appartient déjà l'appareil 200. Par exemple, l'utilisateur peut avoir spécifié une règle interdisant à un même dispositif de commande de piloter deux groupes différents.

Selon un deuxième exemple, l'appareil 200 vérifie s'il n'est pas déjà membre d'au moins un groupe et, le cas échéant, si le nombre de groupes auxquels il appartient déjà est inférieur ou égal à une limite prédéfinie. La limite est ici choisie égale à deux.

Selon un troisième exemple, l'appareil 200 vérifie s'il n'est pas apparié à un nombre de dispositifs de commande 2 supérieur ou égal à une limite prédéfinie. La limite est ici choisie égale à dix.

Selon un quatrième exemple, l'appareil 200 vérifie si le nombre d'appareils 200 avec lesquels il est en communication et qui sont placés dans le mode d'appariement est inférieur ou égal à une limite prédéfinie, ici choisie égale à cinq, voire égale à trois.

Les exemples donnés ci-dessus ne sont pas limitatifs et peuvent être utilisés seuls ou selon toute combinaison admissible. Les vérifications peuvent être réalisées en parallèle ou séquentiellement, pour tout ou partie des conditions décrites à titre d'exemples ci-dessus, ou pour toute combinaison de ces conditions.

Si au moins une des conditions n'est pas satisfaite, alors le processus de création de groupe est interrompu.

Par exemple, lors d'une étape 306, l'appareil 200 envoie automatiquement un message à destination des autres appareils 200, ce message contenant une information selon laquelle la création de groupe a échoué.

Lors d'une étape 308, un signal d'erreur est affiché par une interface utilisateur de l'appareil 200, par exemple en générant une alarme sonore ou visuelle, notamment grâce à un témoin lumineux situé sur l'appareil 200. Cette étape peut être omise.

Le procédé prend fin à l'étape 310.

Si au contraire les conditions sont satisfaites et que l'appareil 200 détermine qu'un groupe peut être créé, alors lors d'une étape 312 l'appareil 200 envoie auxdits autres appareils un message indiquant qu'il vient de joindre le groupe. Cette information peut être représentée par une valeur numérique spécifique d'un champ du message (deny bit).

Lors d'une étape 314, l'appareil 200 détermine automatiquement si l'un des autres appareils 200 sélectionnés a émis un message indiquant une impossibilité de rejoindre le groupe en cours de création, par exemple parce que cet appareil a identifié qu'au moins une desdites conditions n'était pas satisfaite lorsque cet appareil a exécuté l'étape 304.

Si un tel message est identifié comme ayant été reçu, alors l'appareil 200 interrompt le processus de création du groupe, par exemple en mettant en œuvre les étapes 306, 308 et 310.

Dans le cas contraire, lors d'une étape 316, l'appareil 200 vérifie s'il a le statut d'appareil principal.

Si oui, lors d'une étape 318, l'appareil 200 définit automatiquement un identifiant de groupe pour nommer le nouveau groupe. Cet identifiant de groupe est par exemple généré par l'appareil 200 à partir de son propre identifiant. Avantageusement, cet identifiant de groupe est communiqué aux autres appareils sélectionnés.

Si l'appareil n'a pas le statut d'appareil principal, alors lors d'une étape 320 l'appareil 200 acquiert le nom du groupe tel qu'il a été défini par l'un des autres appareils sélectionnés.

Lors d'une étape 322, le groupe est créé par l'appareil 200.

Lors d'une étape 324, l'appareil 200 quitte le mode d'appariement.

Lors d'une étape 326, l'appareil 326 vérifie si tous les autres appareils du groupe nouvellement créé sélectionnés ont bien quitté le mode d'appariement.

Si tel est le cas, alors le procédé prend fin à l'étape 328.

Dans le cas contraire, le procédé de création du groupe est interrompu, par exemple en mettant en œuvre les étapes 306, 308 et 310. Le groupe nouvellement créé est supprimé.

La figure 9 représente un procédé de synchronisation au sein d'un groupe d'appareils 200.

Lors d'une étape 400, un ordre de commande est émis depuis un dispositif de commande 2 à destination des appareils 200 du groupe, par exemple sous la forme d'un message comportant une ou plusieurs trames radio envoyé sur la liaison de communication radio.

Dans l'exemple considéré, l'ordre de commande peut être un ordre de commuter l'état de l'appareil 200 (par ex., commuter l'état de l'appareil 200 depuis un état actif vers un état inactif, ou inversement) ou un ordre de changement de l'état de l'appareil 200.

Le message émis est ensuite reçu par chacun des appareils 200 du groupe.

Les étapes du procédé décrites ci-après sont mises en œuvre par chaque appareil 200, bien qu'elles ne soient décrites qu'en référence à un seul de ces appareils 200 dans un souci de clarté.

Lors d'une étape 402, le message est reçu par l'appareil 200.

Par exemple, l'ordre de commande contenu dans le message est extrait du message puis est stocké temporairement en mémoire 206 de l'appareil 200. Par exemple, l'ordre de commande est une valeur numérique.

Optionnellement, lors de l'étape 402, la qualité de la liaison radio est calculée automatiquement par l'appareil 200 à partir d'une ou plusieurs caractéristiques du message reçu. Par exemple, l'appareil 200 calcule automatiquement un coefficient RSSI.

Lors d'une étape 404, l'appareil 200 envoie, sur la liaison de communication radio, un message de synchronisation à destination des autres appareils 200 du groupe.

Selon des modes de réalisation donnés à titre d'exemple, le message de synchronisation inclut des informations représentatives de l'état de l'appareil 200 (par ex., l'état actif ou inactif) après application de l'ordre de commande, mais aussi de l'identifiant de groupe, de l'ordre de commande reçu et, le cas échéant, de la qualité de la liaison radio (coefficient RSSI), voire aussi un identifiant de l'appareil 200, tel qu'un code produit.

Lorsque l'appareil 200 appartient à deux groupes, le message de synchronisation peut inclure les identifiants de chacun desdits groupe, mais aussi des informations relatives à l'état de chacun des groupes, à l'ordre de commande reçu et, le cas échéant, de la qualité de la liaison radio (coefficient RSSI).

Optionnellement, l'envoi du message peut être répété une ou plusieurs fois au cours du temps, par exemple avec une périodicité prédéfinie.

Lors d'une étape 406, l'appareil 200 reçoit, sur la liaison de communication radio, des messages de synchronisation provenant des autres appareils appartenant audit groupe.

Ces messages de synchronisation ont de préférence une structure similaire à celle du message de synchronisation envoyé par l'appareil 200 et résultent de la mise en œuvre de l'étape 404 par ces autres appareils.

Lors d'une étape 408, l'appareil 200 détermine automatiquement l'état de l'appareil principal à partir des messages reçus.

Puis, lors d'une étape 410, l'appareil 200 compare l'état de l'appareil principal avec la valeur de son propre état après application de l'ordre de commande reçu lors de l'étape 402, c'est-à-dire avec l'état que cet appareil 200 prendrait après application de cet ordre de commande.

En pratique, cette comparaison peut être réalisée après que l'appareil 200 ait appliqué l'ordre de commande reçu, ou bien avant application de l'ordre de commande reçu. Dans ce dernier cas, l'appareil 200 extrapole quel serait son état s'il appliquait l'ordre de commande reçu.

Ensuite, lors d'une étape 412, l'appareil 200 applique l'état de l'appareil principal si une disparité est détectée entre l'état de l'appareil principal et l'ordre de commande reçu. Si aucune disparité n'est détectée, l'appareil 200 applique normalement l'ordre de commande reçu lors de l'étape 402.

En d'autres termes, selon des modes de réalisation, on détecte détecter qu'au moins un des appareils électroniques 200, 200' du groupe présente un état différent de l'état d'au moins un ou plusieurs des autres appareils électroniques 200, 200' du groupe (et notamment de l'appareil principal du groupe) puis on modifie l'état dudit appareil électronique 200, 200' en fonction de l'état d'un appareil principal du groupe.

En cas d'échec, le procédé peut prendre fin sans nécessairement changer l'état de l'appareil 200 (étape 414).

Ainsi, l'état dudit appareil électronique est modifié en fonction de l'état d'un appareil principal du groupe, de préférence pour harmoniser l'état de tous les appareils du groupe, afin qu'ils aient tous le même état, de préférence l'état imposé par l'ordre de commande envoyé par le dispositif de commande 2.

Optionnellement, si l'appareil 200 appartient à plusieurs groupes contenant chacun un appareil maître, comme dans l'exemple illustré dans l'insert (b) de la figure 8, alors l'appareil 200 applique l'état de l'appareil principal de l'un ou de l'autre des groupes auxquels il appartient en fonction d'une règle de priorité prédéfinie.

Le procédé prend ensuite fin à l'étape 414. L'appareil 200 attend ensuite la réception d'un nouvel ordre de commande.

Si en revanche à l'issue de l'étape 410 tous les appareils sont identifiés comme ayant le même état que l'appareil 200, alors le procédé prend fin normalement (étape 414) sans changer l'état de l'appareil 200.

En parallèle de ces étapes 402 à 414, des étapes similaires ou identiques sont mises en œuvre par chacun des autres appareils du groupe, comme illustré par le bloc 416 sur la figure 9.

Grâce à différents aspects des modes de réalisation décrits ci-dessus, les appareils d'un même groupe sont synchronisés et le risque qu'au moins l'un d'entre eux se trouve dans un état incorrect est réduit, même en cas de mauvaise réception de l'ordre de commande, notamment grâce au fait que l'appareil principal est choisi comme étant celui qui bénéficie de la meilleure liaison avec le dispositif de commande, et que c'est l'état de cet appareil principal qui s'impose aux autres appareils en cas de discordance.

Selon des variantes, les modes de réalisation décrits en référence à la gestion des groupes d'appareils 200 peuvent être implémentés indépendamment du dispositif de commande 2 et du procédé d'appariement décrits en référence aux figures 1 à 5.

Les modes de réalisation et les variantes envisagés ci-dessus peuvent être combinés entre eux pour donner naissance à de nouveaux modes de réalisation.

## Revendications

1. Procédé de fonctionnement d'un dispositif de commande sans fil, **caractérisé en ce qu'**il comporte :
- le démarrage (20) d'un circuit de commande (10) du dispositif de commande (2) suite à l'actionnement, par un utilisateur, d'un organe de commande (4) couplé à un dispositif de récupération d'énergie (6) pour recharger une réserve d'énergie (8) qui, seule, alimente électriquement le dispositif de commande ;
- l'envoi (30) d'un message de commande à destination d'un appareil électronique (18, 200, 200'), au moyen d'une interface radio (12) du dispositif de commande, le message de commande incluant un ordre de commande (72) ;
- la comparaison (32) de la durée écoulée depuis le démarrage du circuit de commande avec une première valeur seuil (T1), le dispositif de récupération d'énergie (6) étant configuré pour générer, lors de chaque actionnement de l'organe de commande (4), une quantité d'énergie suffisante pour alimenter le dispositif de commande pendant une durée inférieure à la première valeur seuil ;
- lorsque la durée écoulée est supérieure ou égale à la première valeur seuil (T1), l'envoi (40) d'un message de requête d'appariement à destination de l'appareil électronique, au moyen de l'interface radio ;
dans lequel l'envoi du message de requête d'appariement est répété (40, 42) tant que la durée écoulée est supérieure à la première valeur seuil (T1) et inférieure à une deuxième valeur seuil (T2) ;
dans lequel la deuxième valeur seuil (T2) est comprise entre 800ms et 1000ms ;
et dans lequel la première valeur seuil (T1) est comprise entre 400ms et 600ms.

2. Procédé selon la revendication 1, dans lequel l'envoi du message de commande est répété tant que la durée écoulée est inférieure à la première valeur seuil (T1).

3. Procédé selon la revendication 1 ou la revendication 2, dans lequel le procédé comporte la reprise (44) de l'envoi de messages de commande lorsque la durée écoulée est supérieure à la deuxième valeur seuil (T2) et tant qu'il reste suffisamment d'énergie dans la réserve d'énergie (8).

4. Procédé selon l'une quelconque des revendications précédentes, dans lequel le message de requête d'appariement inclut des informations d'authentification (68, 80) propres au dispositif de commande (2), notamment une clé cryptographique publique (80) associée au dispositif de commande.

5. Procédé selon l'une quelconque des revendications précédentes, dans lequel le message de commande comporte un en-tête (62) et un corps (64) comprenant :
- un identifiant unique (68) du dispositif de commande ;
- l'ordre de commande (72) ;
- des données de sécurité (76) générées par le dispositif de commande (2) et visant à éviter des attaques par rejeu ;
- une signature numérique (78) du message, générée par le dispositif de commande (2).

6. Procédé selon l'une quelconque des revendications précédentes, dans lequel le message de requête d'appariement comporte un en-tête (62) et un corps (64') comprenant :
- un identifiant unique (68) du dispositif de commande ;
- des informations d'authentification (68, 80) propres au dispositif de commande (2) ;
- une signature numérique (78) du message, générée par le dispositif de commande (2).

7. Procédé selon l'une quelconque des revendications précédentes, dans lequel le procédé comporte l'arrêt (44) du circuit de commande lorsque la réserve d'énergie (8) est vide.

8. Procédé selon l'une quelconque des revendications précédentes, comportant :
- la réception, par une pluralité desdits appareils électroniques (200, 200') appartenant à un même groupe d'appareils, du message de commande émis par le dispositif de commande (2) ;
- l'envoi, par chaque appareil électronique (200, 200'), d'un message de synchronisation à destination des autres appareils électroniques (200, 200') du groupe, le message de synchronisation comportant des informations représentatives d'un état de l'appareil électronique et d'un ordre de commande contenu dans ledit message de commande ;
- détecter qu'au moins un des appareils électroniques (200, 200') du groupe présente un état différent de l'état d'au moins un ou plusieurs des autres appareils électroniques (200, 200') du groupe ;
- modifier l'état dudit appareil électronique (200, 200') en fonction de l'état d'un appareil principal du groupe.

9. Procédé selon la revendications, dans lequel l'appareil principal est l'appareil électronique du groupe pour lequel la qualité de la liaison de communication radio avec le dispositif de commande (2) est la plus élevée parmi lesdits appareils électroniques (200, 200') du groupe.

10. Procédé d'appariement entre un dispositif de commande sans fil (2) et un appareil électronique (18, 200, 200'), **caractérisé en ce que** ce procédé comporte :
- l'activation (90) d'un mode d'appariement de l'appareil électronique ;
- par le dispositif de commande sans fil, la mise en œuvre d'un procédé conforme à l'une quelconque des revendications précédentes ;
- par l'appareil électronique (18) :
détecter (92) la réception d'un message de requête d'appariement envoyé par ledit dispositif de commande ;
déterminer (94) si ledit dispositif de commande est déjà apparié avec l'appareil électronique ;
accepter l'appariement (96) du dispositif de commande si ce dernier n'était pas déjà apparié avec l'appareil électronique ou, dans le cas contraire, supprimer l'appariement (98, 100, 102) du dispositif de commande.

11. Dispositif de commande sans fil (2), **caractérisé en ce qu'**il comporte :
- un organe de commande (4) actionnable par un utilisateur ;
- un dispositif de récupération d'énergie (6) couplé à l'organe de commande ;
- une réserve d'énergie (8) rechargée par le dispositif de récupération d'énergie (6) et qui, seule, alimente électriquement le dispositif de commande (2) ;
- un circuit de commande (10) et une interface radio (12) ;
le circuit de commande étant programmé pour :
- démarrer (20) suite à l'actionnement, par un utilisateur, de l'organe de commande (4) ;
- envoyer (30) un message de commande à destination d'un appareil électronique (18, 200, 200'), au moyen de l'interface radio (12), le message de commande incluant un ordre de commande (72) ;
- comparer (32) la durée écoulée depuis le démarrage du circuit de commande avec une première valeur seuil (T1), le dispositif de récupération d'énergie (6) étant configuré pour générer, lors de chaque actionnement de l'organe de commande (4), une quantité d'énergie suffisante pour alimenter le dispositif de commande pendant une durée inférieure à la première valeur seuil ;
- lorsque la durée écoulée est supérieure ou égale à la première valeur seuil (T1), envoyer (40) un message de requête d'appariement à destination de l'appareil électronique, au moyen de l'interface radio ;
dans lequel l'envoi du message de requête d'appariement est répété (40, 42) tant que la durée écoulée est supérieure à la première valeur seuil (T1) et inférieure à une deuxième valeur seuil (T2) ;
dans lequel la deuxième valeur seuil (T2) est comprise entre 800ms et 1000ms ;
et dans lequel la première valeur seuil (T1) est comprise entre 400ms et 600ms.

12. Système domotique comportant un dispositif de commande (2) conforme à la revendication 11 et une pluralité desdits appareils électroniques (200, 200'), dans lequel les appareils électroniques sont configurés pour mettre en œuvre des étapes comportant :
- la réception, par une pluralité d'appareils électroniques (200, 200') appartenant à un même groupe d'appareils, du message de commande émis par le dispositif de commande (2) ;
- l'envoi, par chaque appareil électronique (200, 200'), d'un message de synchronisation à destination des autres appareils électroniques (200, 200') du groupe, le message de synchronisation comportant des informations représentatives d'un état de l'appareil électronique et d'un ordre de commande contenu dans ledit message de commande ;
- détecter qu'au moins un des appareils électroniques (200, 200') du groupe présente un état différent de l'état d'au moins un ou plusieurs des autres appareils électroniques (200, 200') du groupe ;
- modifier l'état dudit appareil électronique (200, 200') en fonction de l'état d'un appareil principal du groupe.

## Patentansprüche

1. Verfahren zum Betrieb einer drahtlosen Steuervorrichtung, **dadurch gekennzeichnet, dass** es aufweist:
- Starten (20) eines Steuerkreises (10) der Steuervorrichtung (2) nach der Betätigung eines mit einer Energierückgewinnungsvorrichtung (6) gekoppelten Steuerelements (4) zum Aufladen eines Energiespeichers (8), der allein die Steuervorrichtung elektrisch versorgt, durch einen Benutzer;
- Senden (30) einer Steuernachricht an ein elektronisches Gerät (18, 200, 200') mittels einer Funkschnittstelle (12) der Steuervorrichtung, wobei die Steuernachricht einen Steuerbefehl (72) einschließt;
- Vergleichen (32) der seit dem Start des Steuerkreises verstrichenen Zeit mit einem ersten Schwellenwert (T1), wobei die Energierückgewinnungsvorrichtung (6) ausgebildet ist, bei jeder Betätigung des Steuerelements (4) eine Energiemenge zu erzeugen, die ausreicht, um die Steuervorrichtung für eine Zeitspanne zu versorgen, die kleiner ist als der erste Schwellenwert;
- wenn die verstrichene Zeit größer oder gleich dem ersten Schwellenwert (T1) ist, Senden (40) einer Kopplungsanfragenachricht an das elektronische Gerät mittels der Funkschnittstelle;
wobei das Senden der Kopplungsanfragenachricht so lange wiederholt wird (40, 42), wie die verstrichene Zeit größer als der erste Schwellenwert (T1) und kleiner als ein zweiter Schwellenwert (T2) ist;
wobei der zweite Schwellenwert (T2) zwischen 800 ms und 1000 ms liegt; und wobei der erste Schwellenwert (T1) zwischen 400 ms und 600 ms liegt.

2. Verfahren nach Anspruch 1, bei dem das Senden der Steuernachricht so lange wiederholt wird, wie die verstrichene Zeit kleiner als der erste Schwellenwert (T1) ist.

3. Verfahren nach Anspruch 1 oder Anspruch 2, bei dem das Verfahren die Wiederaufnahme (44) des Sendens von Steuernachrichten aufweist, wenn die verstrichene Zeit größer ist als der zweite Schwellenwert (T2) und solange noch ausreichend Energie in dem Energiespeicher (8) vorhanden ist.

4. Verfahren nach einem beliebigen der vorhergehenden Ansprüche, bei dem die Kopplungsanfragenachricht eine für die Steuervorrichtung (2) spezifische Authentifizierungsinformation (68, 80), insbesondere einen der Steuervorrichtung zugeordneten öffentlichen kryptographischen Schlüssel (80), einschließt.

5. Verfahren nach einem beliebigen der vorhergehenden Ansprüche, bei dem die Steuernachricht einen Kopf (62) und einen Textkörper (64) aufweist, umfassend:
- eine eindeutige Kennung (68) der Steuervorrichtung;
- den Steuerbefehl (72);
- Sicherheitsdaten (76), die von der Steuervorrichtung (2) erzeugt werden, um Replay-Angriffe zu verhindern;
- eine digitale Signatur (78) der Nachricht, die von der Steuervorrichtung (2) erzeugt wird.

6. Verfahren nach einem beliebigen der vorhergehenden Ansprüche, bei dem die Kopplungsanfragenachricht einen Kopf (62) und einen Textkörper (64') aufweist, umfassend:
- eine eindeutige Kennung (68) der Steuervorrichtung;
- Authentifizierungsinformationen (68, 80), die für die Steuervorrichtung (2) spezifisch sind;
- eine digitale Signatur (78) der Nachricht, die von der Steuervorrichtung (2) erzeugt wird.

7. Verfahren nach einem beliebigen der vorhergehenden Ansprüche, wobei das Verfahren das Abschalten (44) des Steuerkreises umfasst, wenn der Energiespeicher (8) leer ist.

8. Verfahren nach einem beliebigen der vorhergehenden Ansprüche, aufweisend:
- Empfangen der von der Steuervorrichtung (2) gesendeten Steuernachricht durch eine Mehrzahl der elektronischen Geräte (200, 200'), die zu einer selben Gruppe von Geräten gehören;
- Senden von jedem elektronischen Gerät (200, 200') einer Synchronisationsnachricht an die anderen elektronischen Geräte (200, 200') der Gruppe, wobei die Synchronisationsnachricht Informationen enthält, die einen Zustand des elektronischen Geräts und einen in der Steuernachricht enthaltenen Steuerbefehl darstellen;
- Erfassen, dass mindestens eines der elektronischen Geräte (200, 200') der Gruppe einen Zustand aufweist, der sich von dem Zustand mindestens eines oder mehrerer der anderen elektronischen Geräte (200, 200') der Gruppe unterscheidet;
- Ändern des Zustands des elektronischen Geräts (200, 200') in Abhängigkeit vom Zustand eines Hauptgeräts der Gruppe.

9. Verfahren nach dem Anspruch, bei dem das Hauptgerät das elektronische Gerät der Gruppe ist, für das die Qualität der Funkverbindung mit der Steuervorrichtung (2) unter den elektronischen Geräten (200, 200') der Gruppe am höchsten ist.

10. Verfahren zum Koppeln einer drahtlosen Steuervorrichtung (2) mit einem elektronischen Gerät (18, 200, 200'), **dadurch gekennzeichnet, dass** dieses Verfahren aufweist:
- Aktivieren (90) eines Kopplungsmodus des elektronischen Geräts;
- Durchführen des Verfahrens nach einem der vorhergehenden Ansprüche mittels der drahtlosen Steuervorrichtung;
- durch das elektronische Gerät (18):
Erfassen (92) des Empfangs einer von der Steuervorrichtung gesendeten Kopplungsanfragenachricht;
Bestimmen (94), ob die Steuervorrichtung bereits mit dem elektronischen Gerät gekoppelt ist;
Annehmen der Kopplung (96) der Steuervorrichtung, wenn sie nicht bereits mit dem elektronischen Gerät gekoppelt war, oder im gegenteiligen Fall Löschen der Kopplung (98, 100, 102) der Steuervorrichtung.

11. Drahtlose Steuervorrichtung (2), **dadurch gekennzeichnet, dass** sie aufweist:
- ein Steuerelement (4), das von einem Benutzer betätigbar ist;
- eine Energierückgewinnungsvorrichtung (6), die mit dem Steuerelement gekoppelt ist;
- einen Energiespeicher (8), der von der Energierückgewinnungsvorrichtung (6) nachgeladen wird und der allein die Steuervorrichtung (2) mit Strom versorgt;
- einen Steuerkreis (10) und eine Funkschnittstelle (12);
wobei der Steuerkreis programmiert ist,
- nach Betätigung des Steuerelements (4) durch einen Benutzer zu starten (20);
- eine Steuernachricht an ein elektronisches Gerät (18, 200, 200') mittels der Funkschnittstelle (12) zu senden (30), wobei die Steuernachricht einen Steuerbefehl (72) einschließt;
- die seit dem Start des Steuerkreises verstrichene Zeit mit einem ersten Schwellenwert (T1) zu vergleichen (32), wobei die Energierückgewinnungsvorrichtung (6) ausgebildet ist, bei jeder Betätigung des Steuerelements (4) eine Energiemenge zu erzeugen, die ausreicht, um die Steuervorrichtung für eine Zeitspanne zu versorgen, die kleiner ist als der erste Schwellenwert;
- wenn die verstrichene Zeit größer oder gleich dem ersten Schwellenwert (T1) ist, eine Kopplungsanfragenachricht an das elektronische Gerät mittels der Funkschnittstelle zu senden (40);
wobei das Senden der Kopplungsanfragenachricht so lange wiederholt wird (40, 42), wie die verstrichene Zeit größer als der erste Schwellenwert (T1) und kleiner als ein zweiter Schwellenwert (T2) ist;
wobei der zweite Schwellenwert (T2) zwischen 800 ms und 1000 ms liegt; und wobei der erste Schwellenwert (T1) zwischen 400 ms und 600 ms liegt.

12. Gebäudetechnisches System, das eine Steuervorrichtung (2) nach Anspruch 11 und eine Mehrzahl der elektronischen Geräte (200, 200') aufweist, wobei die elektronischen Geräte ausgebildet sind, Schritte ausführen, die aufweisen:
- Empfangen der von der Steuervorrichtung (2) gesendeten Steuernachricht durch eine Mehrzahl von elektronischen Geräten (200, 200'), die zu einer selben Gruppe von Geräten gehören;
- Senden von jedem elektronischen Gerät (200, 200') einer Synchronisationsnachricht an die anderen elektronischen Geräte (200, 200') der Gruppe, wobei die Synchronisationsnachricht Informationen enthält, die einen Zustand des elektronischen Geräts und einen in der Steuernachricht enthaltenen Steuerbefehl darstellen;
- Erfassen, dass mindestens eines der elektronischen Geräte (200, 200') der Gruppe einen Zustand aufweist, der sich von dem Zustand mindestens eines oder mehrerer der anderen elektronischen Geräte (200, 200') der Gruppe unterscheidet;
- Ändern des Zustands des elektronischen Geräts (200, 200') in Abhängigkeit vom Zustand eines Hauptgeräts der Gruppe.

## Claims

1. Method for operating a wireless control device, **characterised in that** it comprises:
- starting (20) a control circuit (10) of the control device (2) following operation by a user of a control member (4) coupled with an energy harvesting device (6) for recharging an energy reserve (8) which, on its own, supplies electrical power to the control device;
- sending (30) a control message to an electronic apparatus (18, 200, 200') by means of a radio interface (12) of the control device, the control message including a control command (72);
- comparing (32) the time that has elapsed since the starting of the control circuit with a first threshold value (T1), the energy harvesting device (6) being configured to generate, each time the control member (4) is operated, an amount of energy that is sufficient to supply power to the control device for a time that is less than the first threshold value;
- when the elapsed time is greater than or equal to the first threshold value (T1), sending (40) a pairing request message to the electronic apparatus by means of the radio interface;
wherein the sending of the pairing request message is repeated (40, 42) as long as the elapsed time is greater than the first threshold value (T1) and less than a second threshold value (T2);
wherein the second threshold value (T2) is between 800 ms and 1000 ms;
and wherein the first threshold value (T1) is between 400 ms and 600 ms.

2. Method according to claim 1, wherein the sending of the control message is repeated as long as the elapsed time is less than the first threshold value (T1).

3. Method according to claim 1 or claim 2, wherein the method comprises repeating (44) the sending of control messages when the elapsed time is greater than the second threshold value (T2) and as long as sufficient energy remains in the energy reserve (8).

4. Method according to any one of the preceding claims, wherein the pairing request message includes authentication information (68, 80) specific to the control device (2), especially a public cryptographic key (80) associated with the control device.

5. Method according to any one of the preceding claims, wherein the control message comprises a header (62) and a body (64) comprising:
- a unique identifier (68) of the control device;
- the control command (72);
- security data (76) generated by the control device (2) and aimed at avoiding replay attacks;
- a digital signature (78) of the message, generated by the control device (2).

6. Method according to any one of the preceding claims, wherein the pairing request message comprises a header (62) and a body (64') comprising:
- a unique identifier (68) of the control device;
- authentication information (68, 80) specific to the control device (2);
- a digital signature (78) of the message, generated by the control device (2).

7. Method according to any one of the preceding claims, wherein the method comprises stopping (44) the control circuit when the energy reserve (8) is empty.

8. Method according to any one of the preceding claims, comprising:
- receiving, by a plurality of said electronic apparatuses (200, 200') belonging to the same group of apparatuses, the control message transmitted by the control device (2);
- sending, by each electronic apparatus (200, 200'), a synchronisation message to the other electronic apparatuses (200, 200') of the group, the synchronisation message comprising information representative of a state of the electronic apparatus and of a control command contained in said control message;
- detecting that at least one of the electronic apparatuses (200, 200') of the group has a state that is different from the state of at least one or more of the other electronic apparatuses (200, 200') of the group;
- modifying the state of said electronic apparatus (200, 200') as a function of the state of a principal apparatus of the group.

9. Method according to claim 8, wherein the principal apparatus is the electronic apparatus of the group for which the quality of the radio communication link with the control device (2) is the highest among said electronic apparatuses (200, 200') of the group.

10. Method for pairing between a wireless control device (2) and an electronic apparatus (18, 200, 200'), **characterised in that** this method comprises:
- activating (90) a pairing mode of the electronic apparatus;
- by the wireless control device, implementing a method according to any one of the preceding claims;
- by the electronic apparatus (18):
detecting (92) the receiving of a pairing request message sent by said control device;
determining (94) whether said control device is already paired with the electronic apparatus;
accepting the pairing (96) of the control device if the control device was not already paired with the electronic apparatus or, in the opposite case, cancelling the pairing (98, 100, 102) of the control device.

11. Wireless control device (2), **characterised in that** it comprises:
- a control member (4) which can be operated by a user;
- an energy harvesting device (6) coupled with the control member;
- an energy reserve (8) which is recharged by the energy harvesting device (6) and which, on its own, supplies electrical power to the control device (2);
- a control circuit (10) and a radio interface (12);
the control circuit being programmed to:
- start (20) following operation by a user of the control member (4);
- send (30) a control message to an electronic apparatus (18, 200, 200') by means of the radio interface (12), the control message including a control command (72);
- compare (32) the time that has elapsed since starting of the control circuit with a first threshold value (T1), the energy harvesting device (6) being configured to generate, each time the control member (4) is operated, an amount of energy that is sufficient to supply power to the control device for a time that is less than the first threshold value;
- when the elapsed time is greater than or equal to the first threshold value (T1), send (40) a pairing request message to the electronic apparatus by means of the radio interface;
wherein the sending of the pairing request message is repeated (40, 42) as long as the elapsed time is greater than the first threshold value (T1) and less than a second threshold value (T2);
wherein the second threshold value (T2) is between 800 ms and 1000 ms;
and wherein the first threshold value (T1) is between 400 ms and 600 ms.

12. Home automation system comprising a control device (2) according to claim 11 and a plurality of said electronic apparatuses (200, 200'), wherein the electronic apparatuses are configured to implement steps comprising:
- receiving, by a plurality of electronic apparatuses (200, 200') belonging to the same group of apparatuses, the control message transmitted by the control device (2);
- sending, by each electronic apparatus (200, 200'), a synchronisation message to the other electronic apparatuses (200, 200') of the group, the synchronisation message comprising information representative of a state of the electronic apparatus and of a control command contained in said control message;
- detecting that at least one of the electronic apparatuses (200, 200') of the group has a state that is different from the state of at least one or more of the other electronic apparatuses (200, 200') of the group;
- modifying the state of said electronic apparatus (200, 200') as a function of the state of a principal apparatus of the group.
